# FASCICULE DE BREVET EUROPEEN

(11) **EP 2 166 728 B1**
(45) Date de publication et mention de la délivrance du brevet: **02.12.2020**
(21) Numéro de dépôt: 09170704.2
(22) Date de dépôt: 18.09.2009
(51) Int. Cl.: H04W 12/08, H04W 12/00, H04L 9/32, H04L 29/06, G07F 7/10, G06Q 20/40, G06Q 20/34

(54) **Procédé d'échange de données, telles que des clés cryptographiques, entre un système informatique et une entité électronique, telle qu'une carte à microcircuit**
Method for exchanging data such as cryptographic keys between a computer system and an electronic entity such as a chip card
Verfahren zum Austausch von Daten, beispielsweise von kryptographischen Schlüsseln, zwischen einem Informationssystem und einer elektronischen Einheit, wie beispielsweise einer Mikrochip-Karte

(30) Priorité: 19.09.2008 FR 0856325
(43) Date de publication de la demande: 24.03.2010
(73) Titulaire: IDEMIA France, 92400 Courbevoie (FR)
(72) Inventeur: Dottax, Emmanuelle, 75017, PARIS (FR); Ziat, Mehdi, 92700, COLOMBES (FR)
(74) Mandataire: Santarelli

(56) Documents cités:
- WO-A-2005/076204
- WO-A-2007/105104
- KR-B1- 100 562 255
- US-A- 6 005 942
- ANONYMOUS: "Public Key Infrastructureand Applications" HTTP://NETSEC.ISECA.ORG/, [Online] 6 septembre 2004 (2004-09-06), XP002534271 Extrait de l'Internet: URL:http://netsec.iseca.org/materials/pres entations/PKI_Applications.ppt> [extrait le 2009-06-25]
- ANONYMOUS: "Index of /materials/presentations" DIRECTORY LISTING, [Online] XP002534272 Extrait de l'Internet: URL:http://netsec.iseca.org/materials/pres entations/> [extrait le 2009-06-25]
- "Chapter 8: Public-Key Encryption ED - MENEZES A; OORSCHOT VAN P; VANSTONE S" HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, [Online] 1 octobre 1996 (1996-10-01), pages 283-319, XP001525008 ISBN: 978-0-8493-8523-0 Extrait de l'Internet: URL:http://www.cacr.math.uwaterloo.ca/hac/ >
- "Chapter 12: Key Establishment Protocols ED - MENEZES A; OORSCHOT VAN P; VANSTONE S" HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, [Online] 1 octobre 1996 (1996-10-01), pages 489-541, XP001525012 ISBN: 978-0-8493-8523-0 Extrait de l'Internet: URL:http://www.cacr.math.uwaterloo.ca/hac/ >
- "Chapter 13: Key Management Techniques ED - MENEZES A; OORSCHOT VAN P; VANSTONE S" HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, [Online] 1 octobre 1996 (1996-10-01), pages 543-590, XP001525013 ISBN: 978-0-8493-8523-0 Extrait de l'Internet: URL:http://www.cacr.math.uwaterloo.ca/hac/ >

## Description

La présente invention concerne des procédés d'échanges de données (par exemple des clés cryptographiques) entre un système informatique, par exemple d'un fournisseur d'applications (en anglais *"Application Provider*"), et une entité électronique (en général sécurisée), telle qu'une carte à microcircuit.

Il est bien connu d'utiliser des clés cryptographiques afin de sécuriser les échanges entre deux interlocuteurs, par exemple au moyen du chiffrage des messages à échanger par une ou plusieurs de ces clés cryptographiques.

Dans ce contexte, il est naturellement nécessaire d'effectuer au préalable des étapes préparatoires qui permettent à chacun des interlocuteurs (et à eux seuls) de pouvoir chiffrer et déchiffrer les messages qu'ils s'échangent.

Une solution pour ce faire est qu'une personne (par exemple un fournisseur de services ou d'applications) souhaitant communiquer de manière sécurisée avec un interlocuteur (par exemple un utilisateur du service ou de l'application) envoie physiquement à cet interlocuteur une entité électronique (par exemple de type carte à microcircuit) mémorisant les clés cryptographiques nécessaires, qui seront alors utilisées pour mettre en œuvre les échanges sécurisés.

Cette solution qui nécessite l'envoi physique de l'entité électronique est naturellement peu pratique. On souhaiterait en effet pouvoir échanger à distance les clés cryptographiques (par exemple pour installer une communication sécurisée avec un nouveau fournisseur d'applications sur une entité électronique déjà détenue par l'utilisateur).

On cherche toutefois à mettre en œuvre cet échange de clés cryptographiques sans recourir à un éventuel système de sécurité fourni par le réseau utilisé pour la communication à distance, afin d'assurer au maximum la sécurité de la communication entre les deux interlocuteurs sans impliquer un organisme tiers dans cette recherche de sécurité.

Dans ce contexte, l'invention propose un procédé d'échange de données entre un système informatique et une entité électronique, caractérisé par les étapes suivantes :
- envoi, de l'entité électronique au système informatique, d'un certificat associant un identifiant de l'entité électronique à une clé publique associée à une clé secrète mémorisée dans l'entité électronique parmi un jeu de clés réservées associé à un premier domaine de sécurité ;
- vérification, par le système informatique et au moyen du certificat, de l'association dudit identifiant et de ladite clé publique ;
- échange, entre une application de l'entité électronique distincte du premier domaine de sécurité et le système informatique, des données chiffrées au moyen de ladite clé publique ou signée par le premier domaine de sécurité au moyen de la clé secrète mémorisée dans l'entité électronique.

On certifie ainsi que la clé (publique ou secrète) utilisée dans l'échange (respectivement pour chiffrer ou signer) est bien celle associée à l'entité électronique désignée par l'identifiant sans toutefois que la clé secrète utilisée ne soit connue d'une autre application que le premier domaine de sécurité.

Selon une première possibilité, l'échange des données comprend l'envoi, du système informatique à ladite application, des données chiffrées au moyen de ladite clé publique associée à la clé secrète mémorisée dans l'entité électronique et signées au moyen d'une clé secrète du système informatique.

Dans ce cas, on peut prévoir une étape de déchiffrement des données chiffrées par le premier domaine de sécurité ayant accès exclusif à la clé secrète mémorisée dans l'entité électronique.

Selon une seconde possibilité, l'échange des données comprend l'envoi, de ladite application au système informatique, des données chiffrées au moyen d'une clé publique du système informatique et signées par le premier domaine de sécurité au moyen de la clé secrète mémorisée dans l'entité électronique.

Le premier domaine de sécurité est exécuté par l'entité électronique et a accès exclusif à la clé secrète mémorisée dans l'entité électronique.

On peut également envisager alors les étapes suivantes :
- envoi, du système informatique à l'entité électronique, d'un certificat du système associant un identifiant associé au système informatique à la clé publique du système informatique ;
- vérification, par l'entité électronique et au moyen du certificat du système, de l'association de l'identifiant associé au système informatique et de la clé publique du système informatique.

On peut prévoir que l'envoi du certificat associant l'identifiant de l'entité électronique à la clé publique associée à la clé secrète mémorisée dans l'entité électronique soit mis en œuvre par le premier domaine de sécurité.

Les données sont par exemple des clés cryptographiques qui pourront être utilisées lors d'une étape d'échange de données entre le système informatique et l'entité électronique sécurisé par l'une au moins desdites clés cryptographiques.

L'entité électronique est par exemple une carte à microcircuit. Il peut s'agir notamment d'une carte d'identification sur un réseau de téléphonie mobile, telle qu'une carte SIM ou USIM.

Ladite application est par exemple un second domaine de sécurité, distinct du premier domaine de sécurité comme déjà indiqué.

L'invention propose ainsi également un procédé mis en œuvre au sein d'une entité électronique afin d'échanger des données avec un système informatique, caractérisé par les étapes suivantes :
- émission, à destination du système informatique, d'un certificat associant un identifiant de l'entité électronique à une clé publique associée à une clé secrète mémorisée dans l'entité électronique parmi un jeu de clés réservées associé à un premier domaine de sécurité ;
- échange, entre une application de l'entité électronique distincte du premier domaine de sécurité et le système informatique, des données chiffrées respectivement au moyen de ladite clé publique ou signées par le premier domaine de sécurité au moyen de la clé secrète mémorisée dans l'entité électronique.

L'invention propose enfin un procédé mis en œuvre au sein d'un système informatique afin d'échanger des données avec une entité électronique, caractérisé par les étapes suivantes :
- réception, en provenance de l'entité électronique, d'un certificat associant un identifiant de l'entité électronique à une clé publique associée à une clé secrète mémorisée dans l'entité électronique parmi un jeu de clés réservées associé à un premier domaine de sécurité ;
- vérification au moyen du certificat de l'association dudit identifiant et de la clé publique ;
- échange, entre une application de l'entité électronique distincte du premier domaine de sécurité et le système informatique, des données chiffrées respectivement au moyen de ladite clé publique ou signées par le premier domaine de sécurité au moyen de la clé secrète mémorisée dans l'entité électronique.

D'autres caractéristiques et avantages de l'invention apparaîtront mieux à la lumière de la description qui suit, faite en référence aux dessins annexés dans lesquels :
- la figure 1 représente un contexte de mise en œuvre de l'invention ;
- la figure 2 représente une entité électronique réalisée conformément aux enseignements de l'invention ;
- les figures 3 à 6 représentent les étapes principales d'un premier exemple de procédé conforme aux enseignements de l'invention ;
- les figures 7 à 9 représentent certaines étapes d'un second exemple de procédé conforme aux enseignements de l'invention ;
- la figure 10 représente une étape d'un troisième exemple de procédé conforme aux enseignements de l'invention.

Comme cela ressortira de la description qui suit, l'invention vise l'échange de clés cryptographiques entre une entité électronique 2 (dans l'exemple, une carte à microcircuit) et un système informatique 12 proposant un service (par la mise en œuvre d'une application) à l'utilisateur détenteur de la carte à microcircuit.

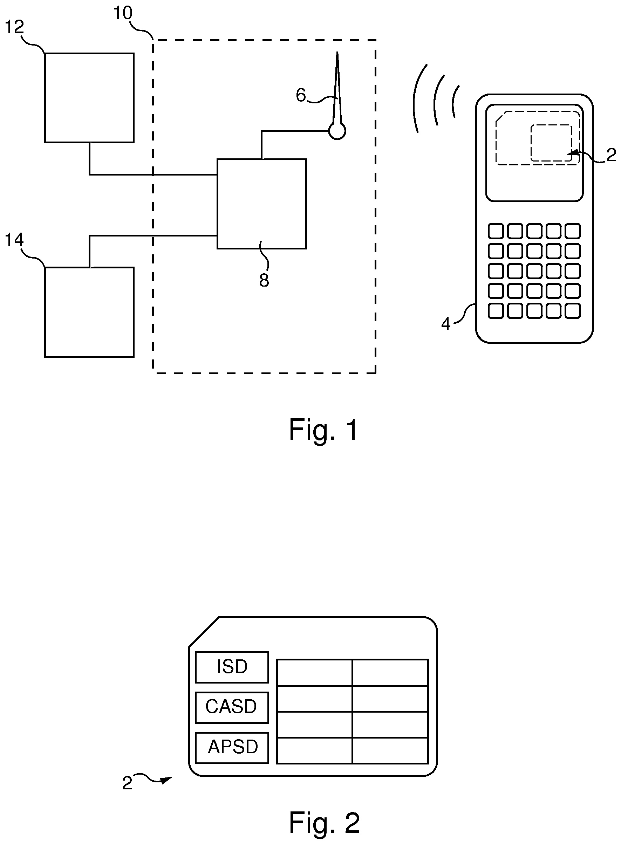

Dans le contexte représenté à titre d'exemple à la figure 1, la carte à microcircuit 2 est reçue dans un téléphone cellulaire 4 qui peut échanger des données avec des dispositifs extérieurs (notamment le système informatique 12) grâce à l'infrastructure d'un réseau de téléphonie mobile 10 déployé par un opérateur.

Les échanges de données entre le téléphone cellulaire 4 et les dispositifs extérieurs 12, 14, utilisent notamment l'intermédiaire d'une station de base 6 ainsi que d'autres équipements 8 de l'opérateur qui permettent par exemple la connexion à d'autres réseaux, tels que le réseau Internet, auquel est par exemple relié le système informatique 12.

Une autorité de contrôle 14 peut également rentrer en communication avec le téléphone cellulaire 4 et le système informatique 12, par exemple (mais non nécessairement) à travers le réseau de communication 10.

Ce réseau de communication 10 permet l'échange de données de manière sécurisée entre les différents dispositifs.

Le fournisseur de services qui gère le système informatique 12 est par exemple une banque qui souhaite pouvoir échanger des données de manière sécurisée entre son système informatique 12 et l'ensemble formé par le téléphone cellulaire 4 et la carte à microcircuit 2 et souhaite pour ce faire échanger des clés cryptographiques avec la carte à microcircuit 2 de manière sécurisée et indépendamment des mécanismes de sécurité du réseau de communication 10.

Comme représenté en figure 2, la carte à microcircuit 2 est équipée d'un microprocesseur apte à exécuter des applications mémorisées (par exemple sous forme d'applets) dans une mémoire non volatile de la carte à microcircuits 2 (par exemple la mémoire non volatile comprise dans le microcircuit de la carte), dont une application ISD fournie par l'émetteur de la carte (en général associé à l'opérateur du réseau de télécommunications 10), une application CASD associée à l'autorité de contrôle 14, et une ou plusieurs applications APSD associées chacune à un fournisseur de services. Ces applications, qui sont aptes à mettre en œuvre des échanges de messages sécurisés et à gérer les données mémorisées dans la carte à microcircuit, sont parfois dénommées *"domaines de sécurité"* (en anglais *"security domains"*)*.*

Le système (notamment le système d'exploitation de la carte ou la machine virtuelle et ses composants) est conçu de telle sorte que l'application du domaine de sécurité a accès exclusif (ou réservé) à des données sécurisées (notamment des clés cryptographiques) auxquelles d'autres applications ne peuvent accéder.

On remarque toutefois que, si les autres applications ne peuvent accéder à ces données sécurisées, elles peuvent les utiliser à travers une application du domaine de sécurité concerné.

Chaque domaine de sécurité est établi au nom d'une entité externe à la carte, qui peut représenter l'émetteur de la carte, un fournisseur d'application ou une autorité de contrôle, en particulier lorsque ces entités ont besoin de services sécuritaires propres et distincts les uns des autres.

Les domaines de sécurité offrent des services de sécurité tels que la gestion de clés, le chiffrement, le déchiffrement et la génération et vérification de signatures aux applications présentent sur la carte ainsi qu'aux entités externes.

Chaque domaine de sécurité est associé à un jeu de clés cryptographiques (en anglais *"key set*") qui ne peuvent pas être accédées directement par une entité autre que le domaine de sécurité lui-même. Ce mécanisme permet à plusieurs fournisseurs indépendants de prévoir des services tout en assurant qu'un fournisseur ne puisse pas accéder aux clefs cryptographiques d'un autre.

L'application ISD qui représente l'opérateur au sein de la carte à microcircuit est notamment chargée de l'installation et de l'instanciation des applications APSD.

L'application CASD est quant à elle utilisée pour la vérification des certificats, et le chiffrement des données comme indiqué ci-après.

Chacune des applications APSD permet des échanges sécurisés avec des dispositifs extérieurs au moyen d'un canal sécurisé par un ensemble de clés cryptographiques implantées dans la carte à microcircuits au cours d'une phase de personnalisation décrite en détail dans la suite, sans recourir aux mécanismes de sécurité du réseau de télécommunications 10.

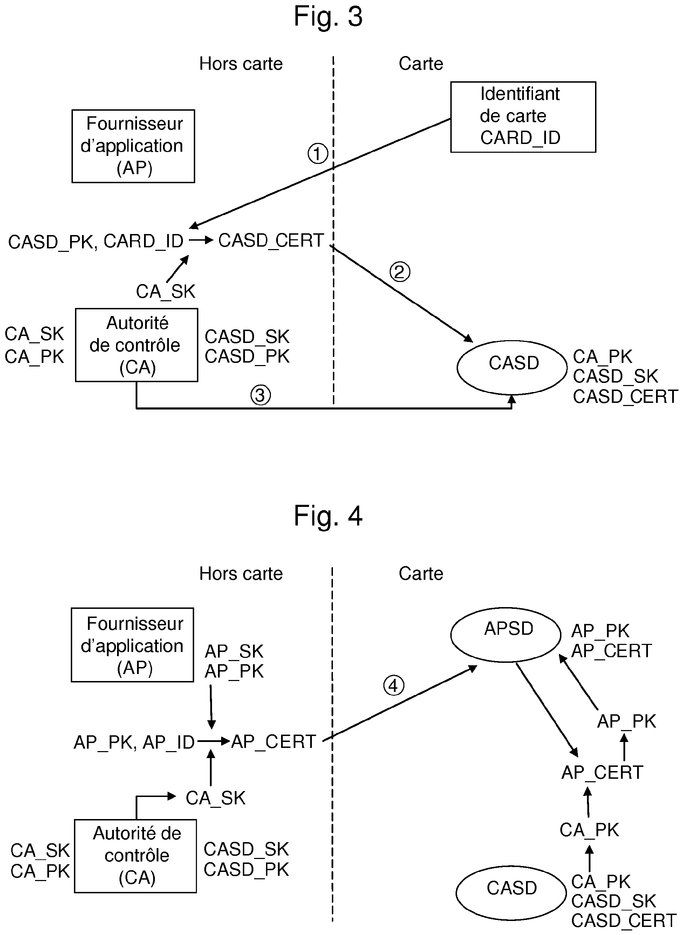

On décrit à présent en référence aux figures 3 à 6 un premier exemple de procédé d'échange de clés cryptographiques réalisé conformément aux enseignements de l'invention.

La première étape générale consiste à mémoriser (flèches 2 et 3) dans la carte à microcircuit, par exemple lors d'une phase de personnalisation dans un centre de personnalisation au moyen de commandes *"Store Data" :*
- la clé secrète d'une paire de clés asymétriques attribuées à l'application CASD portée par la carte à microcircuit ;
- la clé publique CASD_PK de cette même paire de clés asymétriques ;
- le certificat CASD_CERT liant cette clé publique à un identifiant de la carte à microcircuit ;
- la clé publique CA_PK de l'autorité de contrôle CA ;
- éventuellement l'ensemble des clés CASD_KeySet relatives au canal de communication sécurisé que peut établir l'application CASD présente sur la carte à microcircuit.

Le certificat liant la clé publique CASD_PK à l'identifiant CARD_ID de la carte à microcircuit a été préalablement généré par une autorité de contrôle CA (en anglais *"Controlling Authority"*) : le certificat contient l'identifiant de la carte à microcircuit (c'est-à-dire des données qui identifient de manière unique la carte à microcircuit, par exemple au moyen d'un numéro de référence de la carte et de données de référence de l'émetteur de la carte) et la clé publique CASD_PK et est signé par l'autorité de contrôle CA par utilisation de sa clé secrète CA_SK.

Pour ce faire, l'identifiant CARD_ID est par exemple émis par la carte à microcircuit (flèche 1) lors de sa personnalisation au moyen d'une commande de type "*Get Data".*

Les différentes clés mentionnées ci-dessus peuvent être générées dans le centre de personnalisation avant mémorisation dans le cas où l'autorité de contrôle est également le fabriquant de la carte à microcircuit. Dans la négative, l'autorité de contrôle fournit ces clés au fabriquant de carte ou lui donne les moyens nécessaires pour les générer.

On décrit à présent la seconde étape principale du procédé en référence à la figure 4.

Au cours de l'utilisation de la carte, lorsque le fournisseur d'application (ou de service) AP souhaite échanger les clés cryptographiques avec la carte à microcircuit (par exemple afin d'utiliser ces clés cryptographiques pour sécuriser les échanges fournisseur d'application AP - carte à microcircuit dans le cadre de la fourniture de service), le système informatique 12 du fournisseur de service demande à l'opérateur 8 d'envoyer une commande à son application ISD présente à l'intérieur de la carte à microcircuit 2 de manière à lancer l'instanciation de l'application APSD associée au fournisseur d'application AP demandeur. Ce lancement est par exemple réalisé grâce à l'exécution d'un fichier exécutable mémorisé en mémoire non volatile de la carte à microcircuit.

Le système informatique 12 du fournisseur de service transmet (flèche 4) alors à son application APSD son certificat AP_CERT liant un identifiant du fournisseur de service AP_ID et la clé publique AP_PK d'une paire de clés asymétriques dont la clé secrète AP_SK est connue du seul fournisseur de service AP. Le certificat AP_CERT et la clé publique AP_PK sont par exemple mémorisés au moyen d'une commande de type *"Store Data".*

Le certificat AP_CERT du fournisseur de service comprend la clé publique AP_PK et l'identifiant AP_ID du fournisseur de service et est signé au moyen de la clé secrète CA_SK de l'autorité de contrôle CA.

L'application APSD fait alors appel à l'application CASD (par des échanges au sein de la carte à microcircuit 2), qui détient la clé publique CA_PK de l'autorité de contrôle CA, afin de vérifier le certificat AP_CERT du fournisseur de service : l'application CASD vérifie au moyen de la clé publique CA_PK la signature de l'autorité de contrôle (faite au moyen de la clé secrète CA_SK associée à la clé publique CA_PK), ce qui confirme, en cas de vérification positive, que la clé publique AP_PK est bien celle du fournisseur de service (identifiée par AP_ID) et que l'autorité de contrôle CA a autorisé le fournisseur de service AP à installer des applications sur la carte à microcircuit : cette authentification du fournisseur de service permet d'utiliser dans la suite de manière sure la clé publique AP_PK pour le chiffrement de messages destinés au fournisseur de service AP ou pour vérifier la signature de données émanant du fournisseur de service AP.

L'application CASD est tenue informée des certificats caducs.

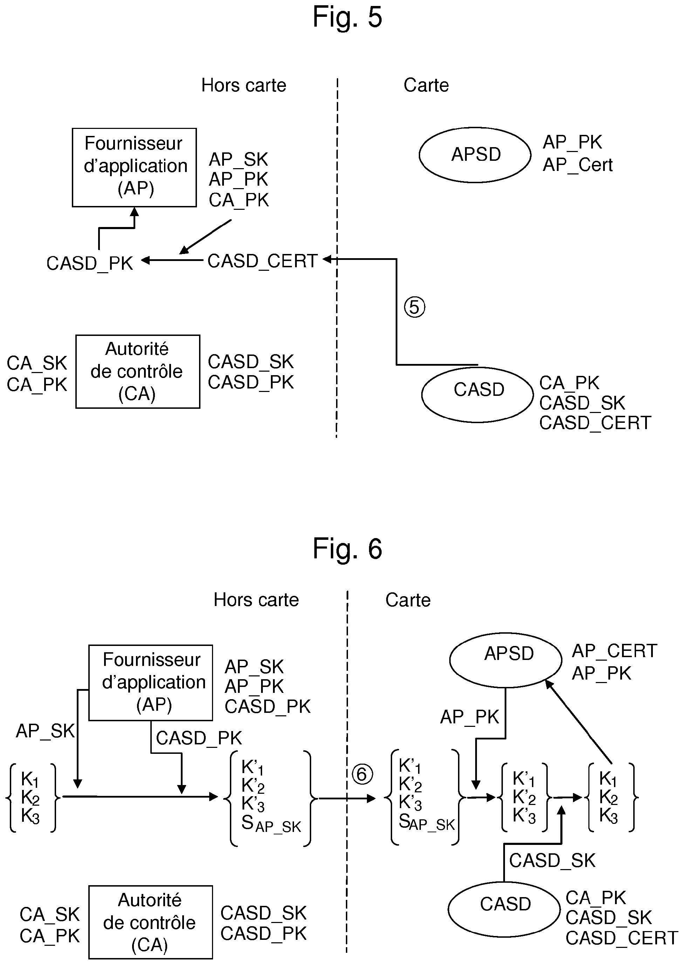

Au cours d'une troisième étape principale du procédé illustrée en figure 5, l'application CASD émet à destination du système informatique 12 du fournisseur de service le certificat CASD_CERT liant la clé publique CASD_PK et l'identifiant de la carte à microcircuit CARD_ID. On utilise par exemple une commande de type *"Get Data"* (flèche 5).

Grâce à ce certificat CASD_CERT et à la clé publique CA_PK de l'autorité de contrôle CA (qui est naturellement disponible à tous), le fournisseur de service AP vérifie la signature du certificat CASD_CERT par l'autorité de contrôle CA (signature réalisée comme déjà indiqué au moyen de la clé secrète CA_SK de l'autorité de contrôle CA) et obtient ainsi la clé publique CASD_PK avec l'assurance que cette clé publique CASD_PK est celle associée à la clé secrète CASD_SK mémorisée dans la carte à microcircuit identifiée par l'identifiant CARD_ID. Le fournisseur de service AP (par l'intermédiaire de son système informatique 12) pourra ainsi de manière sure chiffrer des données destinées à cette carte à microcircuit (et notamment à l'application APSD installée dans cette carte) au moyen de la clé publique CASD_PK ou utiliser cette même clé publique CASD_PK pour vérifier la signature réalisée au moyen de la clé secrète CASD_SK en s'assurant que cette signature a été réalisée par la carte à microcircuit identifiée.

Au cours d'une quatrième étape principale du processus représentée à la figure 6, le système informatique 12 du fournisseur de service AP signe avec sa clé secrète AP_SK le jeu de clés cryptographiques K₁, K₂, K₃ à transmettre à la carte à microcircuit 2 et chiffre le jeu de clés K₁, K₂, K₃ au moyen de la clé publique CASD_PK de la carte à microcircuit.

Le jeu de clés chiffré K'₁, K'₂, K'₃ est alors transmis avec la signature S_{AP_SK} à la carte à microcircuit (flèche 6 en figure 6), par exemple au moyen d'une commande de type *"Store Data".*

L'application APSD qui est en communication avec le système informatique 12 du fournisseur de service AP reçoit ainsi le jeu de clés chiffré et signé et le transmet au sein de la carte à microcircuit à l'application CASD dans le but que cette dernière déchiffre les clés du jeu de clés K'₁, K'₂, K'₃ au moyen de sa clé secrète CASD_SK.

Le jeu de clés déchiffré par l'application CASD est renvoyé (toujours au sein de la carte à microcircuit) à l'application APSD.

L'application APSD vérifie par ailleurs la signature S_{AP_SK} (précédemment réalisée par application de la clé secrète AP_SK du fournisseur de service) au moyen de la clé publique AP_PK du fournisseur de service AP dont l'origine a été certifiée au cours de la seconde étape du processus comme indiqué ci-dessus.

En cas de vérification positive de la signature et après déchiffrement du jeu de clés par l'application CASD, l'application APSD mémorise le jeu de clés K₁, K₂, K₃ en mémoire non volatile en vue de son utilisation future, notamment pour l'établissement d'un canal de communication sécurisée entre le système informatique 12 du fournisseur de service AP et l'application APSD hébergée par la carte à microcircuit 2.

Parmi les applications envisageables, ces échanges de données sécurisées peuvent par exemple permettre le chargement d'une application de paiement dans le but de permettre des paiements sécurisés en utilisant le téléphone cellulaire 4 portant à la carte à microcircuit 2, par exemple par échange à travers une interface de communication courte distance (éventuellement du type NFC) avec un lecteur mis en place par le fournisseur de service AP.

La personnalisation de la carte à microcircuit (c'est-à-dire la mémorisation des clés cryptographiques reçues du fournisseur de service AP) a ainsi été réalisée de manière sécurisée avec authentification des acteurs de l'échange (fournisseur de service AP et carte à microcircuit 2) notamment grâce à la présence de l'application CASD au sein de la carte à microcircuit, sans que les clés cryptographiques n'aient été accessibles à aucun tiers, y compris l'opérateur via son application ISD sur la carte à microcircuit.

Dans le mode de réalisation décrit ici, le jeu de clés cryptographiques est composé de trois clés K₁, K₂, K₃ qui sont respectivement une clé symétrique utilisée pour authentification mutuelle des interlocuteurs, une clé symétrique utilisée pour protéger les échanges en confidentialité (chiffrer et déchiffrer) et une clé symétrique utilisée pour protéger les échanges en intégrité (générer et vérifier des codes d'authentification de messages ou MAC). Il s'agit du jeu de clés (en anglais *"Key Set")* pour la sécurité de communication (en anglais *"Secure Messaging"*) du domaine de sécurité ("*Security Domain"*).

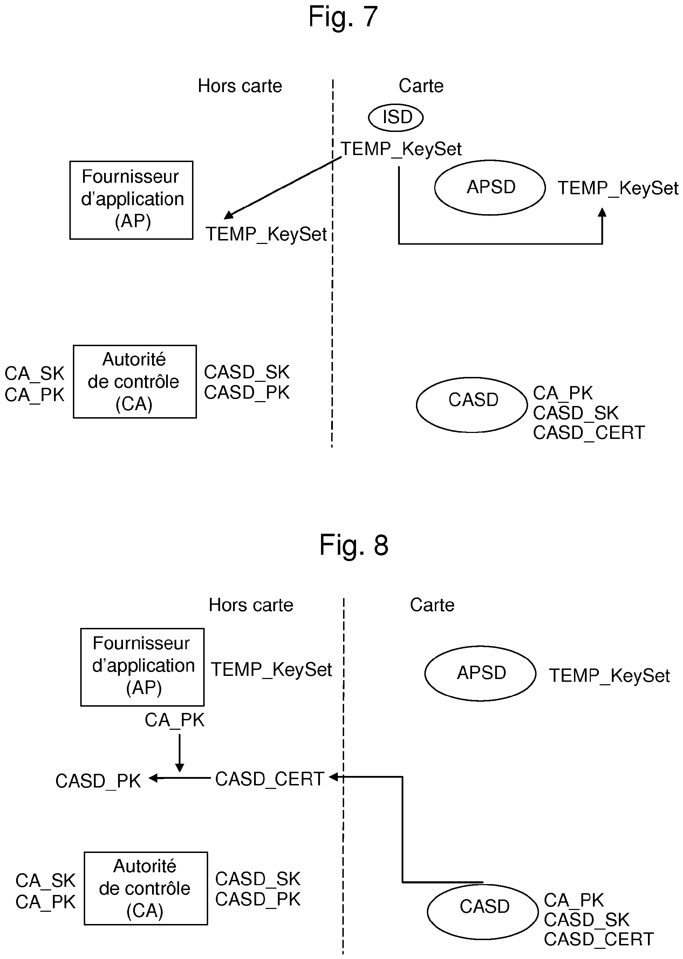

On va à présent décrire en référence aux figures 7 à 9 un second exemple de procédé d'échange de clés cryptographiques conforme aux enseignements de l'invention.

La première étape principale de ce procédé consiste en la personnalisation d'une carte à microcircuit de manière identique à ce qui a été fait dans le premier exemple, comme décrit en référence à la figure 3.

La seconde étape principale selon ce second exemple va à présent être décrite en référence à la figure 7.

Dans cette seconde étape, l'opérateur demande, sur requête du fournisseur d'application AP, par exemple par l'envoi d'une commande à la carte à microcircuit, à l'application ISD (que gère l'opérateur) d'instancier (c'est-à-dire de lancer l'exécution de) l'application APSD associée à ce fournisseur d'application AP.

Dans le présent mode de réalisation, l'opérateur demande également à l'application ISD de personnaliser l'application APSD avec un jeu de clés temporaire TEMP_KeySet par exemple généré et fourni par le fournisseur d'application AP (c'est-à-dire de mémoriser au sein de la carte à microcircuit ce jeu de clés temporaire de telle manière qu'il soit utilisable par l'application APSD). En variante, ce pourrait être l'opérateur qui fournit ce jeu de clés temporaire TEMP_KeySet au système informatique 12 du fournisseur d'application AP.

Le fournisseur d'application AP (et précisément son système informatique 12) et l'application APSD exécutée dans la carte à microcircuit partage ainsi un jeu de clés temporaire commun qui permet des échanges sécurisés entre ces deux entités par des techniques de cryptographie symétrique.

La troisième étape principale dans ce second exemple est illustrée à la figure 8.

Bien que dans un contexte différent, cette étape met en œuvre les mêmes mécanismes que la troisième étape du premier exemple décrite en référence à la figure 5 et ne sera donc pas décrite à nouveau.

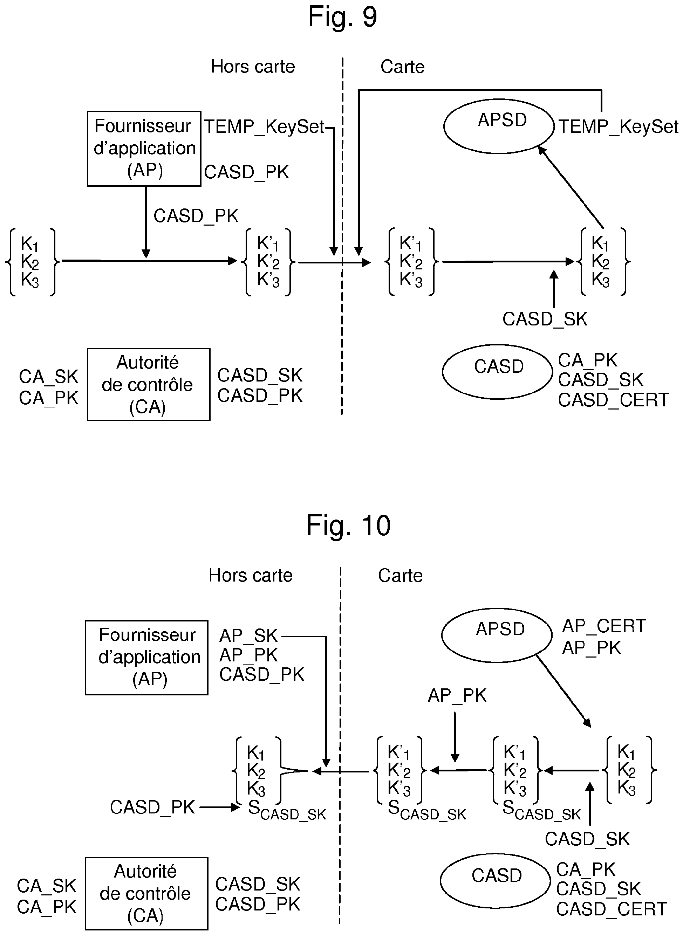

La quatrième étape principale dans ce second exemple est représentée à la figure 9.

Dans cette quatrième étape, le fournisseur d'application AP (en pratique son système informatique 12) chiffre le jeu de clés K₁, K₂, K₃ à transmettre à l'application APSD au moyen de la clé publique CASD_PK de la carte à microcircuit (c'est-à-dire la clé publique de la paire asymétrique dont la clé privée CASD_SK est mémorisée au sein de la carte à microcircuit).

Les clés chiffrées K'₁, K'₂, K'₃ sont alors transmises à l'application APSD au sein de la carte à microcircuit, sécurisées au moyen du jeu de clés temporaire TEMP_KeySet.

L'application APSD reçoit ainsi les clés chiffrées K'₁, K'₂, K'₃ par la liaison sécurisée au moyen du jeu de clés temporaire TEMP_KeySet que cette application détient.

On remarque que cette application APSD n'utilise ainsi dans cette solution que la cryptographie symétrique (et n'a donc pas recours à la cryptographie asymétrique).

L'application APSD fait alors appel à l'application CASD au sein de la carte à microcircuit afin que l'application CASD déchiffre le jeu de clés chiffrées K'₁, K'₂, K'₃ au moyen de la clé secrète CASD_SK.

Le jeu de clés déchiffrées K₁, K₂, K₃ est alors renvoyé à l'application APSD qui mémorise ces clés cryptographiques (ce qui permet de personnaliser cette application), en vue de leur utilisation pour sécuriser des échanges entre l'application APSD au sein de la carte et des applications mises en œuvre par le fournisseur d'application AP en dehors de la carte.

On remarque que la solution qui vient d'être proposée utilise les mécanismes de sécurité de l'opérateur (par le biais de l'application ISD) dans la sécurisation des messages échangés, ce qui permet de garantir leur intégrité, mais que les données transmises sont chiffrées au moyen de la clé publique CASD_PK de la carte et sont donc inaccessibles à l'opérateur ou à son application ISD.

On va à présent décrire en référence à la figure 10 un troisième exemple de procédé d'échange de clés cryptographiques réalisé conformément aux enseignements de l'invention.

Les trois premières étapes principales de ce procédé sont identiques à celles du premier exemple décrites respectivement en référence aux figures 3 à 5.

Dans ce troisième exemple, la quatrième étape principale débute par la génération du jeu de clés cryptographiques K₁, K₂, K₃ au sein de la carte à microcircuit au moyen de l'application APSD (par exemple sur requête du fournisseur d'application AP).

Le jeu de clés cryptographiques K₁, K₂, K₃ est alors transmis à l'application CASD pour signature au moyen de la clé secrète CASD_SK.

Le jeu de clés cryptographiques K₁, K₂, K₃ est par ailleurs chiffré au moyen de la clé publique AP_PK du fournisseur d'application afin d'obtenir un jeu de clés chiffrées K'₁, K'₂, K'₃.

Le jeu de clés chiffrées K'₁, K'₂, K'₃ et la signature S_{CASD_SK} sont transmis au système informatique 12 du fournisseur d'application AP, qui déchiffre d'une part le jeu de clés chiffrées K'₁, K'₂, K'₃ au moyen de sa clé secrète AP_SK, ce qui permet de retrouver les clés K₁, K₂, K₃ précédemment générées par l'application APSD, et vérifie d'autre part la signature S_{CASD_SK} au moyen de la clé publique CASD_PK dont il a été précédemment certifié qu'elle correspondait bien à la carte à microcircuit identifiée par l'identifiant CARD_ID.

Si la signature est correctement vérifiée, le fournisseur d'application AP utilise alors les clés cryptographiques K₁, K₂, K₃ pour mettre en œuvre des échanges sécurisées avec l'application APSD.

Les modes de réalisation qui précèdent ne sont que des exemples possibles de mise en oeuvre de l'invention qui ne s'y limite pas.

Ainsi que cela ressort de ce qui précède, l'acronyme « CASD » signifie « Controlling Authority Security Domain » et l'acronyme « APSD » signifie « Application Provider Security Domain ».

## Revendications

1. Procédé d'échange de données entre un système informatique et une entité électronique, **caractérisé par** les étapes suivantes:
- personnalisation de l'entité électronique par mémorisation d'une clé secrète asymétrique d'une paire de clés asymétriques ;
- envoi, de l'entité électronique au système informatique, d'un certificat associant un identifiant de l'entité électronique à une clé publique asymétrique associée à la clé secrète asymétrique mémorisée dans l'entité électronique parmi un jeu de clés réservées associé à un premier domaine de sécurité;
- vérification, par le système informatique et au moyen du certificat, de l'association dudit identifiant et de ladite clé publique asymétrique;
- obtention, par une application de l'entité électronique distincte du premier domaine de sécurité, d'un jeu de clés temporaire permettant au système informatique et à l'application de communiquer de manière sécurisée au moyen de techniques de cryptographie symétrique, sans avoir recours à la cryptographie asymétrique ;
- échange, entre ladite application et le système informatique, de données comprenant une pluralité de clés symétriques chiffrées au moyen de ladite clé publique asymétrique, l'application recevant les clés chiffrées de manière sécurisée au moyen du jeu de clés temporaire;
- déchiffrement de la pluralité de clés symétriques avec la clé secrète asymétrique; et
- envoi de la pluralité de clés symétriques déchiffrées à l'application pour permettre sa personnalisation et pour sécuriser les échanges avec la système informatique.

2. Procédé d'échange de données selon la revendication 1, dans lequel l'échange des données comprend l'envoi, du système informatique à ladite application, des données chiffrées au moyen de ladite clé publique associée à la clé secrète mémorisée dans l'entité électronique et signées au moyen d'une clé secrète du système informatique.

3. Procédé d'échange de données selon la revendication 2, comprenant une étape de déchiffrement des données chiffrées par le premier domaine de sécurité ayant accès exclusif à la clé secrète mémorisée dans l'entité électronique.

4. Procédé d'échange de données selon l'une des revendications 1 à 3, dans lequel l'envoi du certificat associant l'identifiant de l'entité électronique à la clé publique associée à la clé secrète mémorisée dans l'entité électronique est mis en œuvre par le premier domaine de sécurité.

5. Procédé d'échange de données selon l'une des revendications 1 à 4, dans lequel les données sont des clés cryptographiques.

6. Procédé d'échange de données selon la revendication 5, comprenant une étape d'échange de données entre le système informatique et l'entité électronique sécurisé par l'une au moins desdites clés cryptographiques.

7. Procédé d'échange de données selon l'une des revendications 1 à 6, dans lequel l'entité électronique est une carte à microcircuit.

8. Procédé d'échange de données selon l'une des revendications 1 à 7, dans lequel ladite application est un second domaine de sécurité.

9. Procédé mis en œuvre au sein d'une entité électronique afin d'échanger des données avec un système informatique, **caractérisé par** les étapes suivantes:
- personnalisation de l'entité électronique par mémorisation d'une clé secrète asymétrique d'une paire de clés asymétriques ;
- émission, à destination du système informatique, d'un certificat associant un identifiant de l'entité électronique à une clé asymétrique publique associée à la clé secrète asymétrique mémorisée dans l'entité électronique parmi un jeu de clés réservées associé à un premier domaine de sécurité;
- obtention, par une application de l'entité électronique distincte du premier domaine de sécurité, d'un jeu de clés temporaire permettant au système informatique et à l'application de communiquer de manière sécurisée au moyen de techniques de cryptographie symétrique, sans avoir recours à la cryptographie asymétrique ;
- échange, entre ladite application et le système informatique, de données comprenant une pluralité de clés symétriques chiffrées respectivement au moyen de ladite clé publique asymétrique, l'application recevant les clés chiffrées de manière sécurisée au moyen du jeu de clés temporaire;
- déchiffrement de la pluralité de clés symétriques avec la clé secrète asymétrique; et
- envoi de la pluralité de clés symétriques déchiffrées à l'application pour permettre sa personnalisation.

10. Procédé mis en œuvre au sein d'un système informatique afin d'échanger des données avec une entité électronique, **caractérisé par** les étapes suivantes:
- réception, en provenance de l'entité électronique, d'un certificat associant un identifiant de l'entité électronique à une clé publique asymétrique associée à une clé secrète asymétrique mémorisée dans l'entité électronique parmi un jeu de clés réservées associé à un premier domaine de sécurité;
- obtention d'un jeu de clés temporaire permettant au système informatique et une application de l'entité électronique distincte du premier domaine de sécurité de communiquer de manière sécurisée au moyen de techniques de cryptographie symétrique, sans avoir recours à la cryptographie asymétrique ;
- vérification au moyen du certificat de l'association dudit identifiant et de la clé publique asymétrique;
- échange, avec ladite application, de données comprenant une pluralité de clés symétriques chiffrées respectivement au moyen de ladite clé publique asymétrique, l'application recevant les clés chiffrées de manière sécurisée au moyen du jeu de clés temporaire pour sécuriser les échanges avec la système informatique.

## Patentansprüche

1. Verfahren zum Austausch von Daten zwischen einem Informationssystem und einer elektronischen Einheit, **gekennzeichnet durch** die folgenden Schritte:
- Personalisieren der elektronischen Einheit durch Speichern eines geheimen asymmetrischen Schlüssels von einem Paar von asymmetrischen Schlüsseln;
- von der elektronischen Einheit an das Informationssystem, Senden eines Zertifikats, das eine Kennung der elektronischen Einheit mit einem öffentlichen asymmetrischen Schlüssel verknüpft, der mit dem geheimen asymmetrischen Schlüssel verknüpft ist, der in der elektronischen Einheit unter einem Satz von reservierten Schlüsseln gespeichert ist, der mit einer ersten Sicherheitsdomäne verknüpft ist;
- durch das Informationssystem und mittels des Zertifikats, Überprüfen der Verknüpfung der Kennung und des öffentlichen asymmetrischen Schlüssels;
- durch eine Anwendung der elektronischen Einheit, die sich von der ersten Sicherheitsdomäne unterscheidet, Erhalten eines temporären Satzes von Schlüsseln, der es dem Informationssystem und der Anwendung ermöglicht, auf gesicherte Weise mittels symmetrischer Kryptographietechniken zu kommunizieren, ohne auf asymmetrische Kryptographie zurückzugreifen;
- zwischen der Anwendung und dem Informationssystem, Austauschen von Daten, die eine Vielzahl von symmetrischen Schlüsseln umfassen, die mittels des öffentlichen asymmetrischen Schlüssels verschlüsselt wurden, wobei die Anwendung die verschlüsselten Schlüssel auf gesicherte Weise mittels des temporären Satzes von Schlüsseln empfängt;
- Entschlüsseln der Vielzahl von symmetrischen Schlüsseln mit dem geheimen asymmetrischen Schlüssel; und
- Senden der Vielzahl von entschlüsselten symmetrischen Schlüsseln an die Anwendung, um ihre Personalisierung zu erlauben und um den Austausch mit dem Informationssystem zu sichern.

2. Verfahren zum Austausch von Daten nach Anspruch 1, wobei der Austausch der Daten das Senden der Daten, die mittels des öffentlichen Schlüssels verschlüsselt wurden, der mit dem geheimen Schlüssel verknüpft ist, der in der elektronischen Einheit gespeichert ist, und mittels eines geheimen Schlüssels des Informationssystems signiert sind, von dem Informationssystem an die Anwendung umfasst.

3. Verfahren zum Austausch von Daten nach Anspruch 2, das einen Schritt zum Entschlüsseln der durch die erste Sicherheitsdomäne verschlüsselten Daten umfasst, die über ausschließlichen Zugriff auf den in der elektronischen Einheit gespeicherten geheimen Schlüssel verfügt.

4. Verfahren zum Austausch von Daten nach einem der Ansprüche 1 bis 3, wobei das Senden des Zertifikats, das die Kennung der elektronischen Einheit mit dem öffentlichen Schlüssel verknüpft, der mit dem geheimen Schlüssel verknüpft ist, der in der elektronischen Einheit gespeichert ist, durch die erste Sicherheitsdomäne durchgeführt wird.

5. Verfahren zum Austausch von Daten nach einem der Ansprüche 1 bis 4, wobei die Daten kryptographische Schlüssel sind.

6. Verfahren zum Austausch von Daten nach Anspruch 5, das einen Schritt zum Austausch von Daten zwischen dem Informationssystem und der elektronischen Einheit umfasst, der durch mindestens einen von den kryptographischen Schlüsseln gesichert wird.

7. Verfahren zum Austausch von Daten nach einem der Ansprüche 1 bis 6, wobei die elektronische Einheit eine Mikrochip-Karte ist.

8. Verfahren zum Austausch von Daten nach einem der Ansprüche 1 bis 7, wobei die Anwendung eine zweite Sicherheitsdomäne ist.

9. Verfahren, das in einer elektronischen Einheit zum Austauschen von Daten mit einem Informationssystem durchgeführt wird, **gekennzeichnet durch** die folgenden Schritte:
- Personalisieren der elektronischen Einheit durch Speichern eines geheimen asymmetrischen Schlüssels von einem Paar von asymmetrischen Schlüsseln;
- an das Informationssystem, Ausgeben eines Zertifikats, das eine Kennung der elektronischen Einheit mit einem öffentlichen asymmetrischen Schlüssel verknüpft, der mit dem geheimen asymmetrischen Schlüssel verknüpft ist, der in der elektronischen Einheit unter einem Satz von reservierten Schlüsseln gespeichert ist, der mit einer ersten Sicherheitsdomäne verknüpft ist;
- durch eine Anwendung der elektronischen Einheit, die sich von der ersten Sicherheitsdomäne unterscheidet, Erhalten eines temporären Satzes von Schlüsseln, der es dem Informationssystem und der Anwendung ermöglicht, auf gesicherte Weise mittels symmetrischer kryptographischer Techniken zu kommunizieren, ohne auf asymmetrische Kryptographie zurückzugreifen;
- zwischen der Anwendung und dem Informationssystem, Austauschen von Daten, die eine Vielzahl von symmetrischen Schlüsseln umfassen, die jeweils mittels des öffentlichen asymmetrischen Schlüssels verschlüsselt wurden, wobei die Anwendung die verschlüsselten Schlüssel auf gesicherte Weise mittels des temporären Satzes von Schlüsseln empfängt;
- Entschlüsseln der Vielzahl von symmetrischen Schlüsseln mit dem geheimen asymmetrischen Schlüssel; und
- Senden der Vielzahl von entschlüsselten symmetrischen Schlüsseln an die Anwendung, um ihre Personalisierung zu erlauben und um den Austausch mit dem Informationssystem zu sichern.

10. Verfahren, das in einem Informationssystem zum Austauschen von Daten mit einer elektronischen Einheit durchgeführt wird, **gekennzeichnet durch** die folgenden Schritte:
- Empfangen eines Zertifikats, das von der elektronischen Einheit stammt und das eine Kennung der elektronischen Einheit mit einem öffentlichen asymmetrischen Schlüssel verknüpft, der mit einem geheimen asymmetrischen Schlüssel verknüpft ist, der in der elektronischen Einheit unter einem Satz von reservierten Schlüsseln gespeichert ist, der mit einer ersten Sicherheitsdomäne verknüpft ist;
- Erhalten eines temporären Satzes von Schlüsseln, der es dem Informationssystem und einer Anwendung der elektronischen Einheit, die sich von der ersten Sicherheitsdomäne unterscheidet, ermöglicht, auf gesicherte Weise mittels symmetrischer Kryptographietechniken zu kommunizieren, ohne auf die asymmetrische Kryptographie zurückzugreifen;
- mittels des Zertifikats, Prüfen der Verknüpfung der Kennung und des öffentlichen asymmetrischen Schlüssels;
- Austauschen von Daten, die eine Vielzahl von symmetrischen Schlüsseln umfassen, die jeweils mittels des öffentlichen asymmetrischen Schlüssels verschlüsselt wurden, mit der Anwendung, wobei die Anwendung die auf gesicherte Weise mittels des temporären Satzes von Schlüsseln verschlüsselten Schlüssel empfängt, um den Austausch mit dem Informationssystem zu sichern.

## Claims

1. A method of exchanging data between a data processing system and an electronic entity, **characterized by** the following steps:
- the customization of the electronic entity by storing a secret asymmetric key of a pair of asymmetric keys;
- the sending, from the electronic entity to the data processing system, a certificate associating an identifier of the electronic entity with a public asymmetric key associated with the secret asymmetric key stored in the electronic entity in a set of reserved keys associated with a first security domain;
- the verification of the association of said identifier and said public asymmetric key by the data processing system using the certificate;
- an application of the electronic entity distinct from the first security domain obtaining a temporary key set enabling the data processing system and the application to communicate securely using symmetric cryptography techniques, without having recourse to the asymmetric cryptography;
- said application and the data processing system exchanging data comprising a plurality of symmetric keys encrypted by means of said public asymmetric key, the application securely receiving the encrypted keys by means of the temporary key set;
- decrypting the plurality of symmetric keys using the secret asymmetric key; and
- sending the decrypted plurality of symmetric keys to the application to enable its customization and to secure the exchanges with the data processing system.

2. The method according to claim 1, wherein exchanging data includes sending, from the data processing system to said application, data encrypted by means of said public key associated with the secret key stored in the electronic entity and signed by means of a secret key of the data processing system.

3. The method according to claim 2, including a step of decrypting the encrypted data by the first security domain having exclusive access to the secret key stored in the electronic entity.

4. The method according to any of claims 1 to 3, wherein the certificate associating the identifier of the electronic entity with the public key associated with the secret key stored in the electronic entity is sent by the first security domain

5. The method according to any of claims 1 to 4, wherein the data consists of cryptographic keys.

6. The method according to claim 5, including a step of exchanging data between the data processing system and the electronic entity secured by at least one of said cryptographic keys.

7. The method according to any of claims 1 to 6, wherein the electronic entity is a microcircuit card.

8. The method according to any of claims 1 to 7, wherein said application is a second security domain.

9. A method executed in an electronic entity in order to exchange data with a data processing system, **characterized by** the following steps:
- customizing the electronic entity by storing a secret asymmetric key of a pair of asymmetric keys;
- sending, from the electronic entity to the data processing system, a certificate associating an identifier of the electronic entity with a public asymmetric key associated with the secret asymmetric key stored in the electronic entity from a set of reserved keys associated with a first security domain;
- an application of the electronic entity distinct from the first security domain obtaining a temporary key set enabling the data processing system and the application to communicate securely using symmetric cryptography techniques, without having recourse to the asymmetric cryptography;
- said application and the data processing system exchanging data comprising a plurality of symmetric keys encrypted respectively by means of said public asymmetric key, the application securely receiving the encrypted keys by means of the temporary key set;
- decrypting the plurality of symmetric keys using the secret asymmetric key; and
- sending the decrypted plurality of symmetric keys to the application to enable its customization and to secure the exchanges with the data processing system.

10. A method executed in a data processing system in order to exchange data with an electronic entity, **characterized by** the following steps:
- receiving from the electronic entity a certificate associating an identifier of the electronic entity with a public asymmetric key associated with a secret asymmetric key stored in the electronic entity from a set of reserved keys associated with a first security domain;
- obtaining a temporary key set enabling the data processing system and an application of the electronic entity distinct from the first security domain to communicate securely using symmetric cryptography techniques, without having recourse to the asymmetric cryptography;
- verifying the association of said identifier and the public asymmetric key using the certificate;
- exchanging, with said application, data comprising a plurality of symmetric keys encrypted respectively by means of said public asymmetric keys, the application securely receiving the encrypted keys by means of the temporary key set to secure the exchanges with the computer system.
